# EUROPÄISCHE PATENTANMELDUNG

(11) **EP 1 666 767 A2**
(43) Veröffentlichungstag der Anmeldung: **07.06.2006**
(21) Anmeldenummer: 05021117.6
(22) Anmeldetag: 28.09.2005
(51) Int. Cl.: F16H 25/18

(54) **Aktor zum Erzeugen einer rotatorischen Stellbewegung mit kleinem Drehwinkel**

(30) Priorität: 15.11.2004 DE 202004017716 U
(71) Anmelder: Kuhnke GmbH, 23714 Bad Malente (DE)
(72) Erfinder: Friedrich, Winfried, verstorben (DE)
(74) Vertreter: Hemmer, Arnd

(57) **Zusammenfassung**

Aktor zum Erzeugen einer rotatorischen Stellbewegung mit kleinem Drehwinkel, welcher eine linear wirkende Antriebseinrichtung und ein rotatorisch wirkendes Abtriebselement (12) aufweist, wobei das Abtriebselement (12) mittels zumindest einer Kugelführung (14), welche zur Wirkrichtung der Antriebseinrichtung (2) in der Drehrichtung des Abtriebselementes (12) geneigt verläuft, derart geführt ist, dass die Linearbewegung der Antriebseinrichtung (2) in eine Drehbewegung des Abtriebselementes (12) umgesetzt wird (Fig. 1).

## Beschreibung

Die Erfindung betrifft einen Aktor zum Erzeugen einer rotatorischen Stellbewegung mit kleinem Drehwinkel.

In vielen technischen Anlagen und beispielsweise auch in Kraftfahrzeugen werden für verschiedenste Aufgaben Stellglieder bzw. Aktoren benötigt, um mechanische Stell- und Schaltbewegungen auszuführen. Häufig werden dazu elektromagnetische Aktoren eingesetzt, welche durch Bestromung eines Elektromagneten mechanische Schaltfunktionen ausführen. Diese Aktoren führen dabei im Unterschied zu motorischen Antrieben nur sehr kleine Schalthübe bzw. -bewegungen aus.

Zur Erzeugung von drehenden Stellbewegungen sind Drehmagnete bekannt, um rotatorische mechanische Schaltvorgänge mit kleinem Drehwinkel ausführen zu können. Nachteilig bei diesen Drehmagneten ist ein meist schlechter Wirkungsgrad, und dass für bestimmte Anwendungen keine ausreichend großen Stellkräfte bzw. Drehmomente von dem Aktor erzeugt werden können.

Es ist daher Aufgabe der Erfindung einen verbesserten Aktor zum Erzeugen einer rotatorischen Stellbewegung mit kleinem Drehwinkel zu schaffen, welcher einen größeren Wirkungsgrad aufweist und es ermöglicht, rotatorische Stellbewegungen mit kleinem Drehwinkel und hohem Stellmoment ausführen zu können.

Diese Aufgabe wird durch einen Aktor mit den im Anspruch 1 angegebenen Merkmalen gelöst. Bevorzugte Ausführungsformen ergeben sich aus den Unteransprüchen sowie der nachfolgenden Beschreibung und den beigefügten Figuren.

Der erfindungsgemäße Aktor dient zum Erzeugen einer rotatorischen Stellbewegung mit kleinem Drehwinkel, d. h. einem Drehwinkel, welcher z. B. kleiner als eine volle Drehung ist, vorzugsweise kleiner als 90° und weiter bevorzugt kleiner als 45 ° ist. Erfindungsgemäß ist in dem Aktor eine linear wirkende Antriebseinrichtung und ein rotatorisch wirkendes Abtriebselement vorgesehen. Das heißt, die Betätigung des Aktors erfolgt durch eine Linearbewegung in dem Antriebselement, welche beispielsweise durch einen Elektromagneten, einen Hydraulik- oder Pneumatikzylinder oder ähnliches erzeugt werden kann. In dem Aktor erfolgt eine Umwandlung der Linearbewegung in eine Drehbewegung des Abtriebselementes, welches die gewünschte Stellbewegung zum Stellen eines Maschinenteils oder ähnlichem ausführt.

Die Umwandlung der Linearbewegung in eine Drehbewegung erfolgt mittels zumindest einer Kugelführung, welche zur Wirkrichtung des Antriebs bzw. der Antriebseinrichtung in der Drehrichtung des Abtriebselementes geneigt verläuft. Die Kugelführung verläuft dabei gekrümmt entlang des Drehweges, d. h. im Wesentlichen wendel- bzw. schraubenförmig oder in Form eines Gewindeganges. Die Kugelführung besteht aus zwei Führungsbahnen, zwischen denen zumindest eine Kugel angeordnet ist. Dabei ist vorzugsweise eine der Führungsbahnen an dem Abtriebselement ausgebildet oder mit diesem gekoppelt. Durch die Antriebseinrichtung wird eine lineare Relativbewegung zwischen den beiden Führungsbahnen der Kugelführung erzeugt, welche vorzugsweise in Richtung der Drehachse des Abtriebselementes gerichtet ist. Durch den geneigten bzw. schrägen Verlauf der Kugelführung erzeugt die lineare Relativbewegung zwischen den beiden Führungsbahnen der Kugelformführung eine in Umfangsrichtung gerichtete Kraft bzw. ein Drehmoment, welche eine relative Drehung zwischen den beiden Führungsbahnen verursacht. Auf diese Weise kann die Linearbewegung der Antriebseinrichtung in eine rotatorisch wirkende Bewegung des Abtriebselementes umgesetzt werden. Durch die Verwendung einer Kugelführung erfolgt dies relativ verlustarm, da zwischen den gegeneinander bewegten Elementen die Kraftübertragung durch die Kugeln der Kugelführung erfolgt, so dass im Wesentlichen nur eine Rollreibung auftritt. Die Verwendung einer Kugelführung hat ferner den Vorteil, dass die gegeneinander beweglichen Teile mit äußerst geringem Spiel gegeneinander bewegt werden können, so das die Spalte zwischen den gegeneinander bewegten Teilen des Aktors sehr klein gehalten werden können, was insbesondere bei magnetischen Antrieb bevorzugt ist, da dadurch der Verlust im magnetischen Fluss aufgrund der Spalte minimiert werden kann.

Der so ausgebildete Aktor ist geeignet, eine lineare Antriebsbewegung, welche nur einen geringen Hub, aber eine ausreichend große Kraft aufweist, in eine kleine Drehbewegung mit großem Drehmoment umzusetzen, so dass drehende Schalt- oder Stellbewegungen mit kleinem Winkel und vergleichsweise großen Kräften von dem Aktor ausgeführt werden können.

Vorzugsweise sind mindestens drei, weiter bevorzugt gleichmäßig über den Umfang verteilte, Kugelführungen zur Führung des Abtriebselementes angeordnet. Diese Ausgestaltung hat den Vorteil, dass eine gleichmäßige Führung in allen radialen Richtungen gegeben ist und ein Verkanten des Abtriebselementes bei der erzeugten Bewegung verhindert wird.

Weiter bevorzugt weist jede Kugelführung zumindest zwei Kugeln auf. Auf diese Weise wird ein Kippen des Abtriebelementes um die Kugeln in den Kugelführungen verhindert, so dass eine leichte Bewegung des Abtriebselementes ohne Verkanten in den Kugelführungen möglich ist.

Gemäß einer ersten bevorzugten Ausführungsform der Erfindung ist das Abtriebselement sowohl linear- als auch drehbeweglich und über die zumindest eine Kugelführung an einem feststehenden Führungsteil geführt. Dies bedeutet, dass Abtriebselement bildet gleichzeitig ein linearbewegliches Antriebselement der Antriebseinrichtung. Beispielsweise kann das Abtriebselement über einen Magneten oder Pneumatikzylinder mit einer linear in Richtung der Drehachse des Abtriebselementes gerichteten Kraft beaufschlagt werden. Wenn das Abtriebselement über die zumindest eine schräge Kugelführung an einem feststehenden Führungsteil geführt ist, zwingt die wirkende Linearkraft bei Linearbewegung entlang der Kugelführung das Abtriebselement gleichzeitig zu einer Drehung relativ zu dem feststehenden Führungsteil. Das heißt, die schräg verlaufenden Führungsbahnen der Kugelführung, von welchen eine mit dem Abtriebselement verbunden ist und die andere an dem Führungsteil ausgebildet ist, bewegen sich relativ zueinander in Richtung der Kugelführung, wobei es zu einer gleichzeitigen Linear- und Drehbewegung des Abtriebselementes kommt.

Weiter bevorzugt wirkt die Antriebseinrichtung linear direkt auf das Abtriebselement. Das bedeutet, das Abtriebselement wird direkt auch in linearer Richtung angetrieben, ohne dass weitere Bauteile zwischengeschaltet sind.

Dazu kann das Abtriebselement beispielsweise als linear beweglicher Kolben oder Anker der Antriebseinrichtung ausgebildet sein, welcher über die geneigten Kugelführungen an einem feststehenden Führungsteil derart geführt ist, dass die Bewegungsrichtung des Abtriebselementes durch die Kugelführungen vorgegeben ist. Beispielsweise kann das Abtriebselement als Anker eines elektromagnetischen Aktors direkt von dem von einer Spule erzeugten Magnetfeld bewegt werden. Ferner ist es bei einem pneumatisch betätigten Aktor beispielsweise möglich, dass das Abtriebselement einstückig oder als eine Baueinheit mit dem Kolben eines Pneumatikzylinders ausgebildet ist. Die Kugelführungen, welche in Umfangsrichtung geneigt bzw. schraubenförmig verlaufen, zwingen dabei das Abtriebselement bei seiner Linearbewegung, welche durch magnetische, pneumatische, hydraulische oder ähnliche Kräfte erzeugt wird, in eine gleichzeitige rotatorische Bewegung, so dass sich das Abtriebselement in den Kugelführungen insgesamt schraubenförmig bewegt.

Bevorzugt ist dazu das Abtriebselement konzentrisch zu dem Führungsteil angeordnet. Das bedeutet, das Abtriebselement kann beispielsweise ringförmig ausgebildet sein und ein zylindrische Führungsteil an dessen Außenumfang umgeben. Dabei ist die Kugelführung bzw. sind die Kugelführungen dann zwischen der Innenwandung des Abtriebselementes und der Außenwandung des Führungsteiles ausgebildet. Dazu können direkt in der Außenwandung des Führungsteils und in der Innenwandung des Abtriebselementes die Führungsbahnen der Kugelführungen ausgebildet sein, zwischen denen die Kugeln gehalten bzw. geführt werden. Alternativ ist es beispielsweise möglich, dass das Abtriebselement zylindrisch ausgebildet ist und im Inneren eines ringförmigen Führungsteils konzentrisch zu diesem angeordnet sind. Bei dieser Ausgestaltung sind entsprechend die Führungsbahnen der Kugelführungen am Außenumfang des Abtriebselementes und am Innenumfang des Führungsteils angeordnet.

Gemäß einer weiteren bevorzugten Ausführungsform der Erfindung ist das Abtriebselement ausschließlich rotatorisch beweglich ausgebildet und es ist ferner ein ausschließlich linear bewegliches Antriebselement der Antriebseinrichtung vorgesehen, welches mit dem Abtriebselement über die zumindest eine Kugelführung in Eingriff ist. Da die Kugelführung, welche geneigt bzw. schraubenförmig in Drehrichtung des Abtriebselementes verläuft, die schraubenförmige Relativbewegung zwischen den beiden Führungsbahnen der Kugelführung und damit zwischen den angebundenen Bauteilen, d. h. dem Abtriebselement und dem Antriebselement vorgibt, ist bei einer reinen Linearbewegung des Antriebselementes zwingend eine rotatorische Bewegung des Abtriebselementes entsprechend der Steigung der Kugelführungen erforderlich. So kann das Antriebselement ausschließlich linear beispielsweise über ein elektromagnetisches Feld bewegt werden, über die Kugelführungen wird durch diese Linearbewegung dann das Abtriebselement in eine entsprechende Drehbewegung versetzt.

Vorzugsweise sind dabei das Antriebselement und das Abtriebselement konzentrisch zueinander angeordnet, wobei das Antriebselement am Außenumfang des Abtriebselementes angeordnet und die Kugelführungen zwischen dem Außenumfang des Abtriebselementes und dem Innenumfang des Antriebselementes ausgebildet sind. Das heißt von jeder Kugelführung ist eine der Führungsbahnen am Außenumfang des Abtriebselementes ausgebildet und die zugehörige zweite Führungsbahn am Innenumfang des Antriebselementes ausgebildet. Zwischen beiden Führungsbahnen sind eine, vorzugsweise zwei oder mehr Kugeln angeordnet, welche mit beiden Führungsbahnen in Eingriff sind und so die Bewegung der Führungsbahn des Antriebselementes auf die Führungsbahn des Abtriebselementes übertragen. Durch die Kugeln wird dabei eine Bewegung mit äußerst geringer Reibung erzeugt. Alternativ ist auch eine konzentrische Anordnung von Antriebselement und Abtriebselement möglich, bei welcher das Abtriebselement am Außenumfang des Antriebselementes angeordnet ist und die Kugelführungen zwischen dem Außenumfang des Antriebselementes und dem Innenumfang des Abtriebselementes ausgebildet sind. Das bedeutet, bei dieser Ausführungsform ist das Abtriebselement ringförmig ausgebildet und ein kreiszylindrisches Antriebselement ist in einer kreisförmigen Ausnehmung im Inneren des Abtriebselementes angeordnet.

Die Kugelführungen weisen vorzugsweise jeweils eine konstante Steigung auf. Das heißt, die Linearbewegung der Antriebseinrichtung bzw. deren Antriebselementes wird über die Kugelführung in eine proportionale Drehbewegung des Abtriebselementes umgesetzt.

Alternativ ist es möglich, dass sich die Steigung der Kugelführungen in deren Verlauf ändert. Auf diese Weise ist eine Ausgestaltung möglich, bei welcher bei konstanter Linearbewegung des Antriebselementes, d. h. bei Bewegung mit konstanter Geschwindigkeit, sich die Drehgeschwindigkeit des Abtriebselementes im Verlauf dessen Bewegung ändert. Beispielsweise kann eine schnelle Anfangsbewegung vorgesehen sein, welche sich dann im weiteren Verlauf verlangsamt. So ist es möglich in bestimmten Bewegungsabschnitten eine schnelle Bewegung und in anderen Bewegungsabschnitten stattdessen eine höheres Drehmoment zu erzielen. Die Steigung der Kugelführungen kann sich kontinuierlich ändern oder so ausgebildet sein, dass sie sich sprung- bzw. schrittweise ändert.

Der Steigungswinkel der Kugelführungen relativ zu der linearen Wirkrichtung des Antriebselementes ist vorzugsweise kleiner als 45° und weiter bevorzugt kleiner als 30°. Durch solche Winkel wird erreicht, dass es aufgrund der Selbsthemmung nicht zu einer Bewegungsumkehr kommen kann. Das heißt, eine Drehung des Abtriebselementes führt nicht zu einer Linearbewegung des Antriebselementes. Auf diese Weise kann ein sicheres Halten eines erreichten Stellzustandes des Abtriebselementes erreicht werden. Je nach zu erreichender Stellgeschwindigkeit und dem erforderlichen Drehmoment des Abtriebselementes kann der Steigungswinkel der Kugelführungen an den jeweiligen Einsatzfall angepasst werden, beispielsweise im Bereich zwischen 10 und 20° liegen, um ein ausreichend hohes Drehmoment bei einer nur kleinen Drehbewegung zu erreichen.

Nachfolgend wird die Erfindung beispielhaft anhand der beigefügten Figuren beschrieben. In diesen zeigt:
- Fig. 1: einen Längsschnitt durch einen Aktor gemäß der Erfindung,
- Fig. 2: eine geschnittene Detailansicht eines Führungsringes des Aktors gemäß Fig. 1 und
- Fig. 3: einen Querschnitt des Aktors gemäß Fig. 1 entlang der Linie lll-lll.

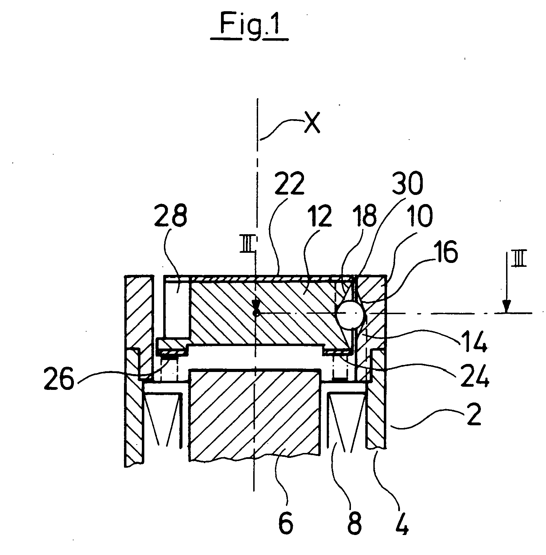

Bei den in Figuren 1 bis 3 beschriebenen Aktor handelt es sich um einen elektromagnetischen Aktor. Entsprechend lässt sich die Erfindung jedoch auch bei anders betätigten Aktoren, beispielsweise bei pneumatischen oder hydraulischen Aktoren einsetzen. Der in Fig. 1 gezeigte Aktor weist einen Elektromagneten 2 mit einem äußeren zylindrischen Magnetgehäuse 4 auf, in dessen Inneren konzentrisch zur Längsachse X ein Magnetkern angeordnet ist. Der Magnetkern 6 ist im Inneren des Magnetgehäuses 4 von einer ringförmigen Magnetspule 8 umgeben.

An das ringförmige Magnetgehäuse 4 schließt an einer Stirnseite ein Führungsring 10 an. Im gezeigten Beispiel ist der Führungsring 10 als separates Bauteil ausgebildet, es ist jedoch auch möglich, den Führungsring 10 einstückig mit dem Magnetgehäuse 4 auszubilden. Im Inneren des Führungsringes 10 ist eine im Querschnitt kreisförmige Ankerplatte 12 angeordnet. Die Ankerplatte 12 ist zum einen in Richtung der Längsachse X linear beweglich und kann sich zum anderen um die Längsachse X drehen. Gleichmäßig verteilt über den Umfang der Ankerplatte 12 sind drei Kugelführungen 14, von denen in Fig. 1 jedoch nur eine dargestellt ist, welche die Bewegungsrichtung der Ankerplatte 12 vorgeben. Die Kugelführungen 14 bestehen jeweils aus einer Führungsbahn 16 am Innenumfang des Führungsringes 10 und einer zweiten Führungsbahn 18 am Außenumfang der Ankerplatte 12. Die Führungsbahnen 16 und 18 weisen jeweils normal zu ihrer Erstreckungsrichtung einen v-förmigen Querschnitt auf. Zwischen den Führungsbahnen 16 und 18 sind jeweils zwei Kugeln 20 (in Fig. 1 ist nur eine Kugel 20 zu sehen) angeordnet. Die Führungsbahnen 16 und 18 jeder Kugelführung 14 verlaufen parallel zueinander in einer Richtung geneigt zu der Längsachse X. So erstrecken sich die Führungsbahnen 16 und 18 in Umfangsrichtung der Ankerplatte 12 wendel- bzw. schraubenförmig geneigt. An ihren beiden Längsenden sind die Führungsbahnen 18 durch Kugelabdeckungen 22 und 24 verschlossen, welche verhindern, dass die Kugeln 20 aus den Führungsbahnen 18 an den Stirnenden austreten können. Entsprechend können auch die Führungsbahnen 16 im Führungsring 10 an den Stirnseiten geschlossen sein.

Fig. 1 zeigt die Ruhelage der Ankerplatte 12, in der diese vom Magnetkern 6 beabstandet ist. Zwischen der Ankerplatte 12 und der Magnetspule 8 ist eine Rückholfeder 26 angeordnet, welche im gezeigten Beispiel als Schraubenfeder ausgebildet ist. Die Rückholfeder 26 ist als Druckfeder ausgebildet, welche die Ankerplatte 12 in die gezeigte Ruhelage drückt.

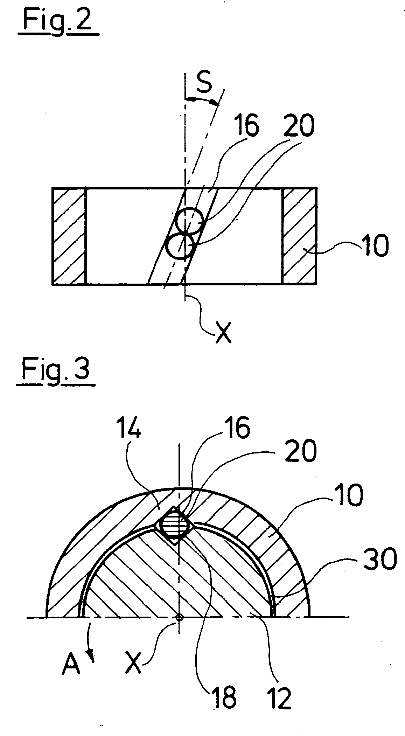

Bei Bestromung der Spule 8 wird die Ankerplatte 12 in der linearen Richtung der Längsachse X an den Kern 6 gegen die Federkraft der Rückholfeder 26 angezogen. Aufgrund der Führung der Ankerplatte 12 in den Kugelführungen 14, führt die Ankerplatte 12 dabei eine Schraubenbewegung entlang der Führungsbahnen 14 aus, d. h. die Ankerplatte 12 dreht sich bei der Linearbewegung um die Längsachse X in der Richtung A (siehe Fig. 3).

Um diese Drehbewegung der Ankerplatte auf anzutreibende bzw. zu stellende Bauteile übertragen zu können, sind in der Ankerplatte 12 eine oder mehrere Mitnehmerausnehmungen 20 angeordnet, in welche Mitnehmer des zu bewegenden Bauteils eingreifen können. Dabei kann sich der Mitnehmer in der Mitnehmerausnehmung 28 in Richtung der Längsachse X linear bewegen, so dass auf den Mitnehmer über die Mitnehmerausnehmung 28 iediglich die Drehbewegung der Ankerplatte 12, nicht jedoch deren Linearbewegung übertragen wird.

Wenn die Bestromung der Magnetspule 8 abgeschaltet wird, drückt die Rückholfeder 26 die Ankerplatte 12 wieder in die in Fig. 1 gezeigte Ruhelage.

Bei dem gezeigten Ausführungsbeispiel erfolgt der magnetische Fluss, welcher von der Magnetspule 8 erzeugt wird, durch den Magnetkern 6, die Ankerplatte 12, den Führungsring 10 und das Magnetgehäuse 4. Das heißt, die Ankerplatte 12, welche das Abtriebselement bildet, und deren Führungselement, nämlich der Führungsring 10, liegen im magnetischen Fluss. Die Verwendung der Kugelführungen 14 hat dabei den Vorteil, dass diese Führungen mit sehr geringen Spiel ausgebildet werden können, so dass der im magnetischen Fluss liegende ringförmige Luftspalt 30 zwischen dem Außenumfang der Ankerplatte 12 und dem Innenumfang des Führungsringes 10 sehr schmal gehalten werden kann, wodurch ein hoher Wirkungsgrad des Aktors erzielt wird.

Fig. 2 zeigt eine Detailansicht des Führungsringes 10 gemäß Fig. 1 in einer schematischen geschnittenen Darstellung. Auch in dieser Darstellung ist nur eine Kugelbahn 16 dargestellt, auch wenn, wie oben ausgeführt, drei gleichmäßig über den Umfang verteilte Kugelführungen 14 mit Führungsbahnen 16 vorgesehen sind. Der Führungsring 10 kann einstückig mit darin ausgebildeten Führungsbahnen 16 gefertigt werden. Alternativ kann der Führungsring 10 aus einzelnen Segmenten zusammengesetzt werden, in welche die Führungsbahnen 16 einfach eingefräst werden können.

In Fig. 2 ist zu sehen, dass die Führungsbahnen 16 der Kugelführungen 14 in einem Steigungswinkel s bezüglich der Längsachse X bzw. bezüglich einer zur Längsachse X parallelen Erzeugenden der Innenfläche des Führungsringes 10 geneigt verlaufen. Somit erstrecken sich die Führungsbahnen 16 und entsprechend die zu diesen parallelen Führungsbahnen 18 am Außenumfang der Ankerplatte 12 wendel- bzw. schraubenförmig in der Umfangsrichtung der Ankerplatte 12. In den Führungsbahnen 16 sind jeweils zwei Kugeln 20 angeordnet, welche ebenfalls mit der zugehörigen gegenüberliegenden Führungsbahn 18 an der Ankerplatte 12 in Eingriff sind, so dass über die Kugeln 20 eine Kraftübertragung zwischen der Ankerplatte 12 und dem Führungsring 10 möglich ist. Dadurch, dass der Führungsring 10 feststehend ausgebildet ist, wird die Ankerplatte 12 aufgrund der wendelförmigen Führung in Richtung der Führungsbahnen 16 bei ihrer Linearbewegung entlang der Längsachse X gleichzeitig um die Längsachse X gedreht (Richtung A in Fig. 3), so dass die Ankerplatte 12 eine schraubenförmige Bewegung ausführt.

In Fig. 3 ist ein Querschnitt einer Kugelführung 14 im Wesentlichen entlang der Linie III-III in Fig. 1 gezeigt. In Fig. 3 ist zu erkennen, dass die Führungsbahnen 16 und 18 gegenüberliegend und parallel verlaufend ausgebildet sind. Dabei weisen die Führungsbahnen 16 und 18 jeweils ein v-förmiges Profil mit im Wesentlichen rechtwinklig zueinander gebildeten Flanken auf. Dadurch wird eine definierte Kugelführung mit möglichst kleinen Kontaktflächen geschaffen, welche eine Bewegung der Ankerplatte 12 relativ zu dem Führungsring 10 mit geringem Spiel und geringer Reibung ermöglicht.

### Bezugszeichenliste

- 2: - Elektromagnet
- 4: - Magnetgehäuse
- 6: - Magnetkern
- 8: - Magnetspule
- 10: - Führungsring
- 12: - Ankerplatte
- 14: - Kugelführungen
- 16, 18: - Führungsbahnen
- 20: - Kugeln
- 22, 24: - Kugelnabdeckungen
- 26: - Rückholfeder
- 28: - Mitnehmerausnehmungen
- 30: - Luftspalt
- X: - Längsachse
- s: - Steigungswinkel
- A: - Drehrichtung

## Patentansprüche

1. Aktor zum Erzeugen einer rotatorischen Stellbewegung mit kleinem Drehwinkel, welcher eine linear wirkende Antriebseinrichtung und ein rotatorisch wirkendes Abtriebselement (12) aufweist, wobei das Abtriebselement (12) mittels zumindest einer Kugelführung (14), welche zur Wirkrichtung der Antriebseinrichtung (2) in der Drehrichtung des Abtriebselementes (12) geneigt verläuft, derart geführt ist, dass die Linearbewegung der Antriebseinrichtung (2) in eine Drehbewegung des Abtriebselementes (12) umgesetzt wird.

2. Aktor nach Anspruch 1, bei welchem mindestens drei, vorzugsweise gleichmäßig über den Umfang verteilte, Kugelführungen (14) zur Führung des Abtriebselementes (12) angeordnet sind.

3. Aktor nach Anspruch 1 oder 2, bei welchem jede Kugelführung (14) zumindest zwei Kugeln (20) aufweist.

4. Aktor nach einem der vorangehenden Ansprüche, bei welchem das Abtriebselement (12) sowohl linear- als auch drehbeweglich ist und über die Kugelführungen (14) an einem feststehenden Führungsteil (10) geführt ist.

5. Aktor nach Anspruch 4, bei welchem die Antriebseinrichtung (12) linear direkt auf das Abtriebselement (12) wirkt.

6. Aktor nach Anspruch 5, bei welchem das Abtriebselement (12) der linear bewegliche Kolben oder Anker der Antriebseinrichtung (2) ist, welcher über die geneigten Kugelführungen (14) an einem feststehenden Führungsteil (10) derart geführt ist, dass die Bewegungsrichtung (X, A) des Abtriebselementes (12) durch die Kugelführungen (14) vorgegeben ist.

7. Aktor nach Anspruch 6, bei welchem das Abtriebselement (12) konzentrisch zu dem Führungsteil (10) angeordnet ist.

8. Aktor nach einem der Ansprüche 1 bis 3, bei welchem das Abtriebselement (12) ausschließlich rotatorisch beweglich ist und ein ausschließlich linear bewegliches Antriebselement der Antriebseinrichtung mit dem Abtriebselement über die zumindest eine Kugelführung (14) in Eingriff ist.

9. Aktor nach Anspruch 8, bei welchem das Antriebselement und das Abtriebselement konzentrisch zueinander angeordnet sind, wobei das Antriebselement am Außenumfang des Abtriebselementes angeordnet und die Kugelführungen (14) zwischen dem Außenumfang des Abtriebselementes und dem Innenumfang des Antriebselementes ausgebildet sind.

10. Aktor nach Anspruch 8, bei welchem das Antriebselement und das Abtriebselement konzentrisch zueinander angeordnet sind, wobei das Abtriebselement am Außenumfang des Antriebselementes angeordnet und die Kugelführungen (14) zwischen dem Außenumfang des Antriebselementes und dem Innenumfang des Abtriebselementes ausgebildet sind.

11. Aktor nach einem der vorangehenden Ansprüche, bei welchem die Kugelführungen (14) eine konstante Steigung (s) aufweisen.

12. Aktor nach einem der Ansprüche 1 bis 10, bei welchem sich die Steigung (s) der Kugelführungen in deren Verlauf ändert.

13. Aktor nach einem der vorangehenden Ansprüche, bei welchem der Steigungswinkel (s) der Kugelführungen (14) relativ zu der Wirkrichtung (X) des Antriebselementes (2) kleiner 45° und vorzugsweise kleiner als 30° ist.
